# EUROPEAN PATENT SPECIFICATION

(11) **EP 3 237 272 B1**
(45) Date of publication and mention of the grant of the patent: **27.11.2019**
(21) Application number: 15873744.5
(22) Date of filing: 21.12.2015
(51) Int. Cl.: B62J 1/16, B60N 2/26, B60R 21/16, B62J 27/00

(54) **INFLATABLE PROTECTION FOR A CHILD SEAT**
AUFPUMPBARER SCHUTZ FÜR EINEN KINDERSITZ
PROTECTION GONFLABLE POUR SIÈGE D'ENFANT

(30) Priority: 22.12.2014 SE 1451639
(43) Date of publication of application: 01.11.2017
(73) Proprietor: Cocoon Airbag Protection AB, 223 81 Lund (SE)
(72) Inventor: GARATEA, Emma, 211 55 Malmö (SE)
(74) Representative: Hansson Thyresson AB
(86) International application number: PCT/SE2015/051383
(87) International publication number: WO 2016/105269

(56) References cited:
- WO-A1-93/07026
- DE-A1- 19 754 541
- FR-A1- 2 887 845
- GB-A- 2 323 571
- JP-A- 2015 036 271
- US-A- 5 511 850
- US-A- 5 779 304
- US-A1- 2014 008 959
- US-A1- 2014 008 959
- US-A1- 2014 084 645

## Description

### TECHNICAL FIELD

The present invention relates to a protection of a child which is seated in a child seat of e.g. a bicycle and more specifically to an inflatable airbag for such a seat.

### BACKGROUND

Every day accidents happen where bicycles are involved. In order to avoid severe injuries the cyclist may wear protection such as a helmet or protective garments. However, a lot of cyclists today transport their children on the back of the bicycle which means that they are also exposed to dangerous situations. The alternative safety devices for the person sitting behind the cyclist are few on the market but what is more important to a parent than the safety of their child. A frontal or back impact with e.g. a vehicle will make the bicycle flip over, leaving the child completely unprotected. If the cycle falls to the ground or get hit by a car what protects the child besides from a helmet?

Examples of prior art are disclosed in e.g. US/20140008959A1, which shows all the features of the preamble of claim 1, as well as in DE19754541 A1 and FR2887845A1.

### SUMMARY

An object of the present invention is to provide an improved child protection device. This object is achieved by a technique defined in the appended independent claims; certain embodiments being set forth in the related dependent claims.

In a first aspect there is provided a device for protecting a child in a child seat of a bicycle or the like, during an unexpected event, e.g. a collision or fall. The device comprises a case unit and an inflatable airbag unit, which is arranged within the case unit in an idle state. The airbag unit is configured to inflate to an inflated state in case of an abnormal movement of the child seat and to at least partly cover the child in said inflated state. The device at least mitigates the risks of injuring the child in an impact with e.g. another or the ground.

According to the invention the device is detachably mounted to the child seat. This is advantageous since the device then may be used for several child seats.

According to the invention the device is mounted to a back portion of a back rest of the child seat. This is an advantageous since it is easy for the user to access the back portion of the seat.

In yet another embodiment the inflatable airbag unit comprises at least three inflatable portions. The first portion is configured to inflate around one side of said child seat and child, the second portion is configured to inflate around the other side of said child seat and child, and the third portion is configured to inflate above the top of said child seat and at least partly down over the head of the child. This gives a good protection for the child during an impact.

In an alternative embodiment the device further comprises inflator means, where the inflator means comprises a sensor element which is configured to detect an abnormal movement of said child seat and control means which is connected to the sensor element and which controls the inflation of the airbag unit.

In an embodiment the device further comprises an indicator which is configured to indicate a mode of the device. In this way it is easy for the user to detect the status of the device, e.g. if the device is properly attached to the child seat or if the battery needs to be charged.

In another embodiment the indicator is configured to display the indication on the top surface if the top portion. The indication is then very easy to spot for a user.

In a second aspect there is provided a child seat for a bicycle comprising a device as described above.

### BRIEF DESCRIPTION OF THE DRAWINGS

Embodiments of the invention will be described in the following, reference being made to the appended drawings which illustrate non-limiting examples of how the inventive concept can be reduced into practice.
Fig. 1 is a perspective view of the back side of a child seat provided with a device according to an embodiment of the present invention,
Fig. 2 is a perspective view of the back side of a child seat showing a base portion and a case unit of the device shown in Fig. 1,
Fig. 3 is an exploded view of the device in Fig 1,
Fig. 4 shows the elements of a inflator means according to an embodiment of the invention,
Fig. 5 is a top view of the base portion of the device,
Fig, 6 is a bottom view of the case unit of the device
Fig. 7 is a view of the inside of the case unit of the device,
Fig. 8 is a top view of the case unit of the device, and
Figs 9a-9d shows a sequence of when an airbag unit of the device is inflated.

### DETAILED DESCRIPTION OF EMBODIMENTS

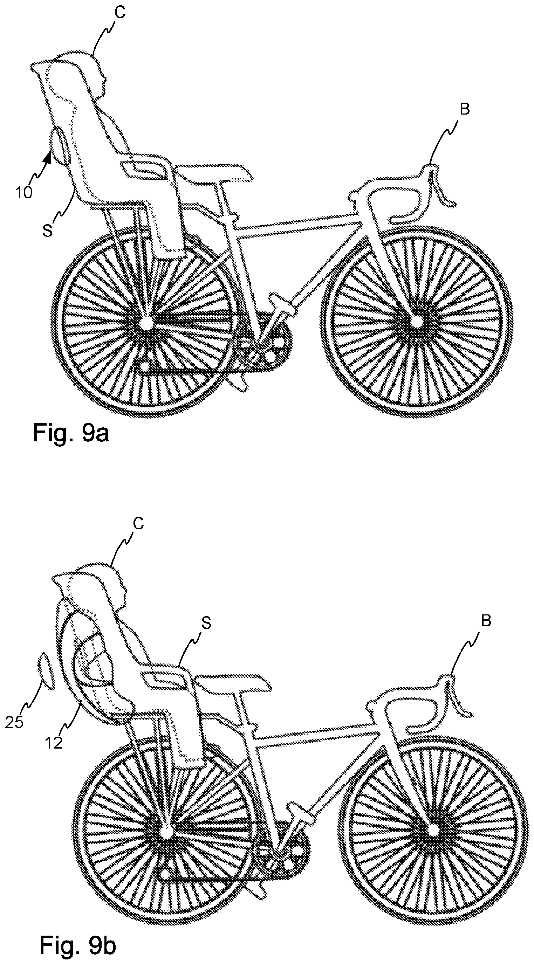

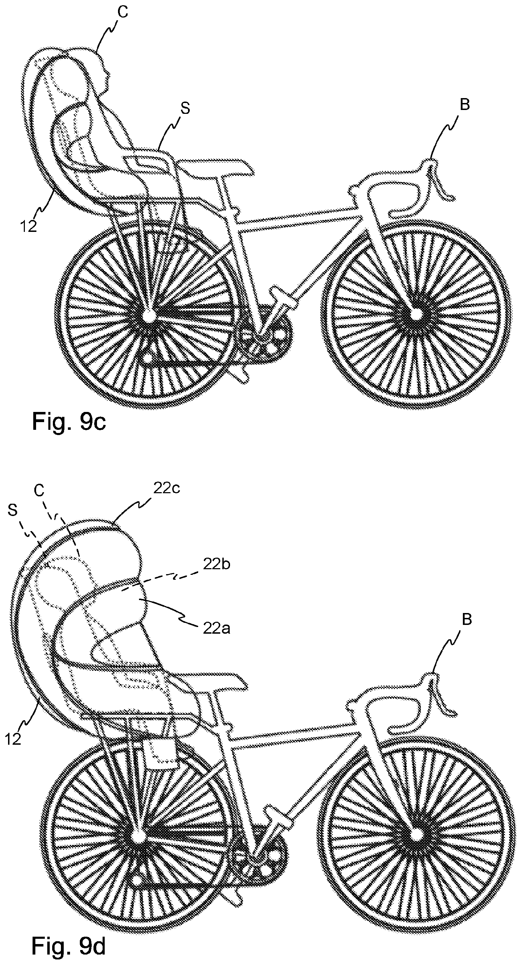

With reference to the figures a device 10 for protecting a child C in a child seat S of e.g. a bicycle B or the like is provided. The protection device 10 is able to protect the child C during an unexpected event or an abnormal movement of the child seat S, e.g. a collision or a fall. The device 10 includes a case unit 11 and an inflatable airbag unit 12 which is arranged within the case unit 11 in an idle state. The airbag unit 12 is configured to inflate to an inflated state in case of the abnormal movement of the child seat S and to at least partly cover the child C in the inflated state. The inflation process is shown in Figs 9a-9d.

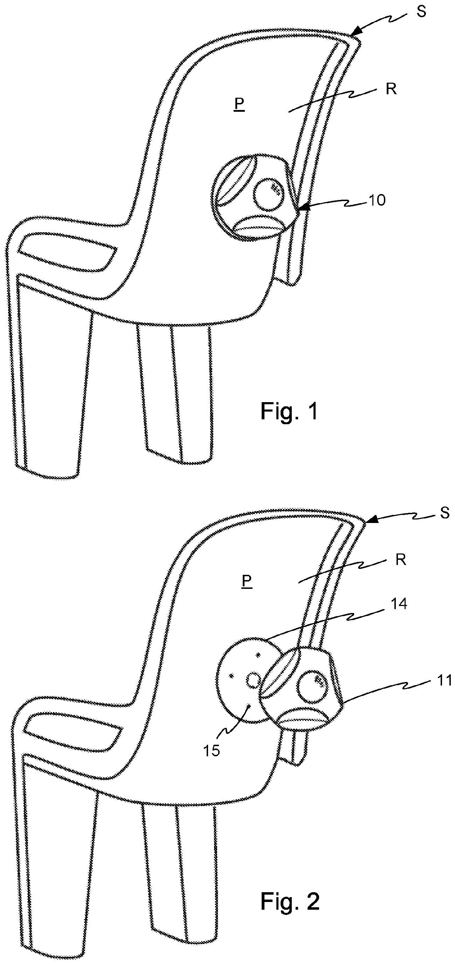

The device 10 is preferably detachably mounted to the child seat S, which can be seen in Figs 1 and 2. This means that the device 10 may be moved between child seats S or bicycles B depending which one is in use. In order to mount the device 10 easily to the child seat S it further includes a base portion 14 which is mounted to the child seat S and which is configured to receive the case unit 11. The case unit 11 is detachably mounted to the base portion 14 whereas it is preferred that the base unit is fixed to the child seat S by means of e.g. screws 15. Each transportation unit, e.g. bicycle, which is intended to use the device 10 may then each have a base portion 14 to which one joint case unit 11 is attachable to. In an alternative embodiment (not shown) the device is detachably mounted to a part of the transportation unit, e.g. bicycle.

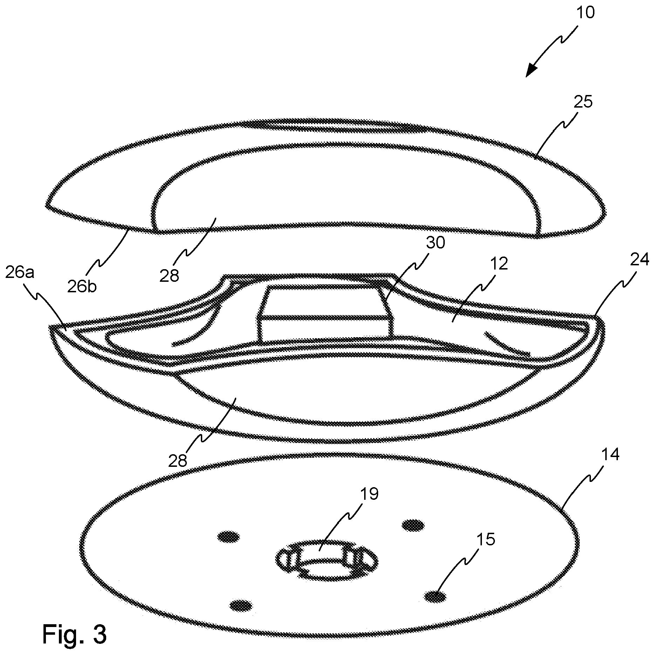

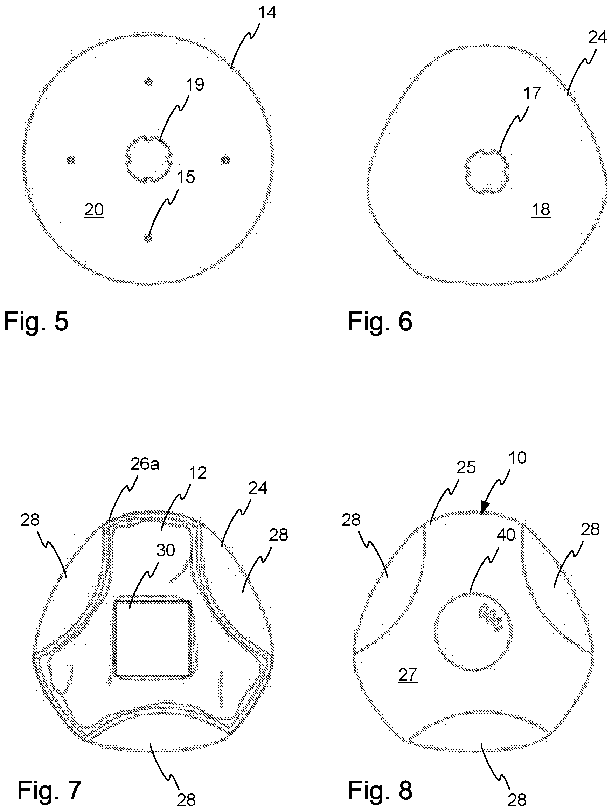

The case unit 11 is provided with a protrusion 17 on its bottom surface 18, see Fig. 6, which corresponds to a recess 19 of the top surface 20 of the base portion 14, see Figs 3 and 5. In order to attach the case unit 11 to the base portion 14 the protrusion is inserted into the recess 19 and then rotated so that the protrusion 17 is secured in the recess 19. The base portion 14 is preferably mounted to a back portion P of a back rest R of the child seat S but may in another embodiment be mounted elsewhere on either the child seat S or the bicycle B.

The inflatable airbag unit 12 has at least three inflatable portions 22a, 22b, 22c, which can be seen in Figs 9a-9d, where the first portion 22a is configured to inflate around one side of the child seat S and child C, the second portion 22b is configured to inflate around the other side of the child seat S and child C, and the third portion 22c is configured to inflate above the top of the child seat S and at least partly down over the head of the child C. The three inflatable portions 22a, 22b, 22c may in one embodiment be made in one piece but may in an alternative embodiment be made as at least two separate pieces. The airbag unit 12 is preferably made of an ultra strong nylon fabric but may be made of any other material suitable for the purpose.

Further, shown in Fig. 3, the case unit 11 includes a bottom portion 24 and a top portion 25 which in an idle state are attached to each other, where the top portion 25 is configured to be removed during inflation of the airbag unit 12. The bottom and top portion 24, 25 are each provided with a rim portion 26a, 26b which enables the top portion 25 to be evenly removed from the bottom portion 24 during inflation of the airbag unit 12. In an embodiment the entire top portion 25 falls off the bottom portion 24 during the beginning of the inflation process. In an alternative embodiment the top portion breaks into pieces during the inflation. The rim portion 26 is configured to make the removal of the top portion 25 from the bottom portion 24 more controlled by being more sensitive to increased pressure from e.g. the airbag unit 12. The portions 24, 25 are further provided with gripping areas 28, three on each portion 24, 25, made of a different material than the rest of the portions 24, 25, which are easy to grip for a user. The rim portion 26 and these gripping areas 28 are made of a softer material than the rest of the portions 24, 25 which easily may break during the increased pressure, which means that the inflation process is not hindered by the removal of the top portion 25 from the bottom portion 24. This softer material is preferably a soft flexible material such as rubber. The material used for the rest of the top and bottom portion 24, 25 is preferably a hard non-flexible material, e.g. a hard plastic material. Other materials e.g. carbon fiber may also be used. In alternative embodiment the removal of the top portion from the bottom portion may be done differently.

In another embodiment of the invention (not shown) the case unit includes a bottom portion and a top portion, which is an idle state are attached to each other, where the top portion is configured to be opened during inflation of the airbag unit. The top portion may be opened from its middle, like a flower, so that the airbag unit may expand without being hindered.

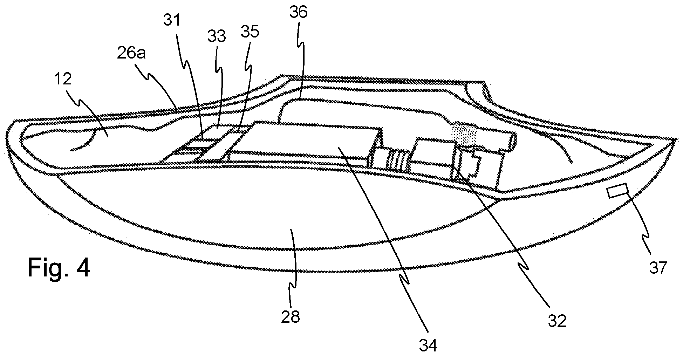

In order to inflate the airbag unit 12 the device 10 further includes inflator means 30, see e.g. Fig. 7, which is arranged within the case unit 11 during the idle state and which is configured to inflate the airbag unit 12 during the abnormal movement of the child seat S. The inflator means 30 which is more specifically shown in Fig. 4 includes, in this embodiment, a sensor element 31 which is configured to detect the abnormal movement of the child seat S, an inflation valve 32 and control means 33, e.g. a circuit, which is connected to the sensor element 31 and which controls the inflation valve 32. In a preferred embodiment the sensor element 31 is an accelerometer which detects a change and/or directional change of movement and/or acceleration. The inflator means 30 preferably also includes a rechargeable battery pack 34, a gyroscope 35, which measures the position of the device 10, a carbon dioxide cartridge 36 and a USB port 37. The USB port 37 is for charging the battery pack 34. In alternative embodiments the content of the inflator means 30 can be different from what is described above. For example, the inflator means may use another gas or liquid except from carbon dioxide or a combination of gas and fuel, a so called hybrid.

In order to know that the device 10 is e.g. correctly mounted to the base portion 14 the device 10 further includes an indicator 40 which is configured to indicate a mode of the device 10, see e.g. Fig 8. The indicator 40 is configured to indicate the mode by means of e.g. light and/or sound. More specifically the indicator 40 is configured to indicate the mode of the battery pack 34 of the inflator means 30 and/or if the case unit 11 is correctly mounted to the base portion 14. The indicator 40 is configured to display the indication on the top surface 27 of the top portion 25 so that the user easily can see that everything is ok before taking off.

Finally, although the inventive concept has been described above with reference to specific embodiment, it is not intended to be limited to the specific form set forth herein. Rather, the invention is limited only by the accompanying claims and, other embodiments than the specific above are equally possible within the scope of these appended claims.

## Claims

1. A device for protecting a child (C) in a child seat (S) comprising a back rest (R), of a bicycle (B) or the like, during an unexpected event, e.g. a collision or fall, said device comprising a case unit (11) and an inflatable airbag unit (12) which is arranged within the case unit (11) in an idle state, wherein the airbag unit (12) is configured to inflate to an inflated state in case of an abnormal movement of the child seat (S) and to at least partly cover said child (C) in the said inflated state, **characterized in that** said device (10) further comprises a base portion (14) which is detachably mounted to a back portion (P) of said back rest (R) of said child seat (S), and which is configured to receive the case unit (11), wherein the case unit (11) is detachably mounted to the base portion (14).

2. The device according to claim 1, wherein the device (10) is detachably mounted to said bicycle (B).

3. The device according to any one of the preceding claims, wherein the inflatable airbag unit (12) comprises at least three inflatable portions (22a, 22b, 22c), wherein the first inflatable portion (22a) is configured to inflate around one side of the child seat (S) and child (C), the second inflatable portion (22b) is configured to inflate around the other side of the child seat (S) and child (C), and the third inflatable portion (22c) is configured to inflate above the top of the child seat (S) and at least partly down over the head of the child (C).

4. The device according to claim 3, wherein the three inflatable portions (22a, 22b, 22c) are made in one piece.

5. The device according to claim 3, wherein the three inflatable portions (22a, 22b, 22c) are made as at least two separate pieces.

6. The device according to any one of the preceding claims, further comprising inflator means (30) which is arranged within the case unit (11) during the idle state and which is configured to inflate the airbag unit (12) during an abnormal movement of said child seat (S).

7. The device according to claim 6, wherein said inflator means (30) comprises a sensor element (31) which is configured to detect an abnormal movement of said child seat (S) and control means (33) which is connected to the sensor element (31) and which controls inflation of the airbag unit (12).

8. The device according to claim 7, wherein the sensor element (31) is an accelerometer.

9. The device according to any one of the preceding claims, wherein the case unit (11) comprises a bottom portion (24) and a top portion (25) which in an idle state are attached to each other, and wherein the top portion (25) is configured to be removed during inflation of the airbag unit (12).

10. The device according to claim 9, wherein the bottom and top portion (24, 25) are each provided with a rim portion (26a, 26b) which enables the top portion (24) to be evenly removable from the bottom portion (24) during inflation of the airbag unit (12).

11. The device according to any one of the claims 1-8, wherein the case unit (11) comprises a bottom portion and a top portion, which in an idle state are attached to each other, and wherein the top portion is configured to be opened during inflation of the airbag unit (12).

12. A child seat for a bicycle comprising a device (10) according to any one of the preceding claims, wherein the device (10) is optionally mountable to a back portion (P) of a back rest (R) of said child seat (S)

## Patentansprüche

1. Vorrichtung zum Schutz eines Kindes (C) in einem Kindersitz (S), der eine Rückenlehne (R) eines Fahrrads (B) oder dergleichen umfasst, während eines unerwarteten Ereignisses, z.B. einer Kollision oder eines Sturzes, wobei die Vorrichtung eine Gehäuseeinheit (11) und eine aufblasbare Airbageinheit (12), die in einem Ruhezustand innerhalb der Gehäuseeinheit (11) angeordnet ist, umfasst, wobei die Airbageinheit (12) dazu ausgelegt ist, sich im Falle einer anormalen Bewegung des Kindersitzes (S) in einen aufgeblasenen Zustand aufzublasen und das Kind (C) in dem aufgeblasenen Zustand zumindest teilweise zu bedecken, **dadurch gekennzeichnet, dass** die Vorrichtung (10) ferner einen Basisabschnitt (14) umfasst, der abnehmbar an einem hinteren Abschnitt (P) der Rückenlehne (R) des Kindersitzes (S) montiert ist und zur Aufnahme der Gehäuseeinheit (11) ausgelegt ist, wobei die Gehäuseeinheit (11) abnehmbar an dem Basisabschnitt (14) montiert ist.

2. Vorrichtung nach Anspruch 1, wobei die Vorrichtung (10) abnehmbar an dem Fahrrad (B) befestigt ist.

3. Vorrichtung nach einem der vorhergehenden Ansprüche, wobei die aufblasbare Airbageinheit (12) mindestens drei aufblasbare Abschnitte (22a, 22b, 22c) umfasst, wobei der erste aufblasbare Abschnitt (22a) dazu ausgelegt ist, sich um eine Seite des Kindersitzes (S) und des Kindes (C) aufzublasen, der zweite aufblasbare Abschnitt (22b) dazu ausgelegt ist, sich um die andere Seite des Kindersitzes (S) und des Kindes (C) aufzublasen, und der dritte aufblasbare Abschnitt (22c) dazu ausgelegt ist, sich über der Oberseite des Kindersitzes (S) und zumindest teilweise über den Kopf des Kindes (C) hinunter aufzublasen.

4. Vorrichtung nach Anspruch 3, wobei die drei aufblasbaren Abschnitte (22a, 22b, 22c) in einem Stück gebildet sind.

5. Vorrichtung nach Anspruch 3, wobei die drei aufblasbaren Abschnitte (22a, 22b, 22c) aus mindestens zwei getrennten Teilen gebildet sind.

6. Vorrichtung nach einem der vorhergehenden Ansprüche, ferner umfassend eine Aufblaseinrichtung (30), die in einem Ruhestand innerhalb der Gehäuseeinheit (11) angeordnet ist und dazu ausgelegt ist, die Airbageinheit (12) während einer anormalen Bewegung des Kindersitzes (S) aufzublasen.

7. Vorrichtung nach Anspruch 6, wobei die Aufblasvorrichtung (30) ein Sensorelement (31), das dazu ausgelegt ist, eine anormale Bewegung des Kindersitzes (S) zu erfassen, und eine Steuereinrichtung (33), die mit dem Sensorelement (31) verbunden ist und das Aufblasen der Airbageinheit (12) steuert, umfasst

8. Vorrichtung nach Anspruch 7, wobei das Sensorelement (31) ein Beschleunigungssensor ist.

9. Vorrichtung nach einem der vorhergehenden Ansprüche, wobei die Gehäuseeinheit (11) einen unteren Abschnitt (24) und einen oberen Abschnitt (25) umfasst, die in einem Ruhezustand aneinander befestigt sind, und wobei der obere Abschnitt (25) dazu ausgelegt ist, während des Aufblasens der Airbageinheit (12) entfernt zu werden.

10. Vorrichtung nach Anspruch 9, wobei der untere und der obere Abschnitt (24, 25) jeweils mit einem Randabschnitt (26a, 26b) versehen sind, der es ermöglicht, den oberen Abschnitt (24) während des Aufblasens der Airbageinheit (12) gleichmäßig von dem unteren Abschnitt (24) zu entfernen.

11. Vorrichtung nach einem der Ansprüche 1-8, wobei die Gehäuseeinheit (11) einen unteren Abschnitt und einen oberen Abschnitt umfasst, die in einem Ruhezustand aneinander befestigt sind, und wobei der obere Abschnitt dazu ausgelegt ist, während des Aufblasens der Airbageinheit (12) geöffnet zu werden.

12. Kindersitz für ein Fahrrad, umfassend eine Vorrichtung (10) nach einem der vorhergehenden Ansprüche, wobei die Vorrichtung (10) optional an einem hinteren Abschnitt (P) einer Rückenlehne (R) des Kindersitzes (S) montierbar ist.

## Revendications

1. Dispositif pour protéger un enfant (C) dans un siège pour enfant (S) comprenant un dossier (R), d'une bicyclette (B) ou analogue, pendant un événement inattendu, par exemple une collision ou une chute, ledit dispositif comprenant une unité de logement (11) et une unité de coussin de sécurité gonflable (12) qui est disposée à l'intérieur de l'unité de logement (11) dans un état au repos, l'unité de coussin de sécurité gonflable (12) étant configurée pour se gonfler dans un état gonflé en cas de mouvement anormal du siège pour enfant (S) et pour recouvrir au moins partiellement ledit enfant (C) dans ledit état gonflé, **caractérisé par le fait que** ledit dispositif (10) comprend en outre une partie de base (14) qui est montée de manière détachable sur une partie arrière (P) dudit dossier (R) dudit siège pour enfant (S) et qui est configurée pour recevoir l'unité de logement (11), l'unité de logement (11) étant montée de manière détachable sur la partie de base (14).

2. Dispositif selon la revendication 1, dans lequel le dispositif (10) est monté de manière détachable sur ladite bicyclette (B).

3. Dispositif selon l'une quelconque des revendications précédentes, dans lequel l'unité de coussin de sécurité gonflable (12) comprend au moins trois parties gonflables (22a, 22b, 22c), la première partie gonflable (22a) étant configurée pour se gonfler autour d'un côté du siège pour enfant (S) et de l'enfant (C), la deuxième partie gonflable (22b) étant configurée pour se gonfler autour de l'autre côté du siège pour enfant (S) et de l'enfant (C), et la troisième partie gonflable (22c) étant configurée pour se gonfler au-dessus de la partie supérieure du siège pour enfant (S) et au moins partiellement vers le bas sur la tête de l'enfant (C).

4. Dispositif selon la revendication 3, dans lequel les trois parties gonflables (22a, 22b, 22c) sont réalisées d'un seul tenant.

5. Dispositif selon la revendication 3, dans lequel les trois parties gonflables (22a, 22b, 22c) sont réalisées sous la forme d'au moins deux éléments distincts.

6. Dispositif selon l'une quelconque des revendications précédentes, comprenant en outre un moyen de gonfleur (30) qui est agencé à l'intérieur de l'unité de logement (11) pendant l'état au repos et qui est configuré pour gonfler l'unité de coussin de sécurité (12) pendant un mouvement anormal dudit siège pour enfant (S).

7. Dispositif selon la revendication 6, dans lequel ledit moyen de gonfleur (30) comprend un élément de capteur (31) qui est configuré pour détecter un mouvement anormal dudit siège pour enfant (S) et un moyen de commande (33) qui est relié à l'élément de capteur (31) et qui commande le gonflage de l'unité de coussin de sécurité (12) .

8. Dispositif selon la revendication 7, dans lequel l'élément de capteur (31) est un accéléromètre.

9. Dispositif selon l'une quelconque des revendications précédentes, dans lequel l'unité de logement (11) comprend une partie inférieure (24) et une partie supérieure (25) qui, dans un état au repos, sont fixées l'une à l'autre, et la partie supérieure (25) est configurée pour être retirée pendant un gonflage de l'unité de coussin de sécurité (12).

10. Dispositif selon la revendication 9, dans lequel les parties inférieure et supérieure (24, 25) comportent chacune une partie de rebord (26a, 26b) qui permet à la partie supérieure (24) de pouvoir être retirée uniformément de la partie inférieure (24) pendant un gonflage de l'unité de coussin de sécurité (12).

11. Dispositif selon l'une quelconque des revendications 1 à 8, dans lequel l'unité de logement (11) comprend une partie inférieure et une partie supérieure qui, dans un état au repos, sont fixées l'une à l'autre, et la partie supérieure est configurée pour être ouverte pendant un gonflage de l'unité de coussin de sécurité (12).

12. Siège pour enfant pour une bicyclette comprenant un dispositif (10) selon l'une quelconque des revendications précédentes, le dispositif (10) étant facultativement apte à être monté sur une partie arrière (P) d'un dossier (R) dudit siège pour enfant (S).
